# EUROPEAN PATENT APPLICATION

(11) **EP 3 451 695 A1**
(43) Date of publication of application: **06.03.2019**
(21) Application number: 16902246.4
(22) Date of filing: 30.11.2016
(51) Int. Cl.: H04R 3/00, G06F 3/0488

(54) **METHOD AND APPARATUS FOR COLLECTING SOUND SIGNAL**

(30) Priority: 19.05.2016 CN 201610333675
(71) Applicant: Huawei Technologies Co., Ltd., Longgang District Shenzhen, Guangdong 518129 (CN)
(72) Inventor: YANG, Xiao, Shenzhen Guangdong 518129 (CN); LEE, Fang-ching, Shenzhen Guangdong 518129 (CN)
(74) Representative: Isarpatent
(86) International application number: PCT/CN2016/108080
(87) International publication number: WO 2017/197867

(57) **Abstract**

The present invention discloses a sound signal collection method and apparatus, to reduce a size of a directional monitoring device, so that the directional monitoring device is applicable to a portable electronic device. The method is applied to an electronic device having at least two microphones, and the method includes: obtaining, by the electronic device, first indication information, where the first indication information is used to indicate a position of a target sound source of at least two sound sources; receiving, by the electronic device, at least two mixed signals from the at least two sound sources by using the at least two microphones, where the at least two mixed signals are in a one-to-one correspondence to the at least two microphones, each of the at least two mixed signals includes at least two sound signals, the at least two sound signals are in a one-to-one correspondence to the at least two sound sources, and each sound signal comes from a corresponding sound source; and obtaining, by the electronic device, a target sound signal from the target sound source according to the first indication information.

## Description

This application claims priority to Chinese Patent Application No. 201610333675.7, filed with the Chinese Patent Office on May 19, 2016 and entitled "SOUND SIGNAL COLLECTION METHOD AND APPARATUS", which is incorporated herein by reference in its entirety.

### TECHNICAL FIELD

Embodiments of the present invention relate to the field of electronic devices, and more specifically, to a sound signal collection method and apparatus.

### BACKGROUND

Currently, a special directional monitoring device is already available. A microphone is used to receive a sound wave. A paraboloidal sound collection hood is disposed in a back position of the microphone, and is configured to gather normally incident sound waves into the microphone in a focus position. After the microphone receives and converts the gathered sound waves into an electrical signal, the electrical signal is amplified by using an amplifier, and finally an earphone is driven to give out a sound. Sound waves that are reflected by the paraboloidal sound collection hood and that cannot be gathered in the focus position cannot be received by the microphone. Therefore, a direction of the paraboloidal sound collection hood may be adjusted according to a target direction of a desired sound, so that a sound wave in the target direction can be received by using the microphone.

However, this kind of special directional monitoring device has a complex structure and a quite large paraboloidal sound collection hood, and is not suitable for a portable electronic device, such as a mobile phone. In addition, the special directional monitoring device is expensive and may not be widely used.

### SUMMARY

This application provides a sound signal collection method and apparatus, to reduce a size of a directional monitoring device, so that the directional monitoring device is applicable to a portable electronic device.

According to a first aspect, this application provides a positioning method, where the method is applied to an electronic device having a touchscreen, and the method includes: presenting, by the electronic device, a graphical user interface GUI by using the touchscreen, where the GUI includes a first axis, a second axis, and a third axis with a position of the electronic device as an intersection point, any two axes of the first axis, the second axis, or the third axis are perpendicular to each other, the first axis and the second axis form a first plane, and the third axis and the first plane form a second plane; detecting, by the electronic device, a first operation performed by a user on the touchscreen, where the first operation includes a touch and a drag; determining, by the electronic device according to the first operation, a display position of a target point in the GUI, determining, as a first angle, an angle formed by the first axis and a projection of a connection line between the target point and the first intersection point on the first plane, determining, as a second angle, an angle formed by the third axis and a projection of the connection line between the target point and the first intersection point on the second plane, and displaying the first angle and the second angle by using the touchscreen; and determining, by the electronic device, a direction of the target point relative to the electronic device according to the first angle and the second angle.

A position of the target point in three-dimensional space with the position of the electronic device as a center may be entered by performing an operation on the touchscreen, so that the electronic device determines the direction of the target point relative to the electronic device. This is convenient and easy to operate.

With reference to the first aspect, in a first possible implementation of the first aspect, the GUI further includes a first circumference with the intersection point as a center, presented on the first plane, and a second circumference with the intersection point as a center, presented on the second plane, the first circumference and the second circumference are circumferences with a same radius, the target point is presented on the first circumference on the first plane, and the target point is presented on the second circumference on the second plane; and the method further includes: detecting, by the electronic device, a second operation performed by the user on the target point on the first circumference, so that a radius of the first circumference varies with movement of the target point, where the second operation includes a touch and a drag; determining, by the electronic device, the radius of the first circumference according to the second operation, and displaying the radius of the first circumference by using the touchscreen; and determining, by the electronic device, a distance between the target point and the electronic device according to the radius of the first circumference; or detecting, by the electronic device, a third operation performed by the user on the target point on the second circumference, so that a radius of the second circumference varies with movement of the target point, where the third operation includes a touch and a drag; determining, by the electronic device, the radius of the second circumference according to the third operation, and displaying the radius of the second circumference by using the touchscreen; and determining, by the electronic device, a distance between the target point and the electronic device according to the radius of the second circumference.

The distance between the target point and the electronic device may be determined by performing an operation on the first circumference or the second circumference on the touchscreen, so that the electronic device determines the position of the target point relative to the electronic device more accurately.

According to a second aspect, this application provides a sound signal collection method, where the method is applied to an electronic device having at least two microphones, and the method includes: obtaining, by the electronic device, first indication information, where the first indication information is used to indicate a direction of a target sound source of at least two sound sources relative to the electronic device; receiving, by the electronic device, at least two mixed signals from the at least two sound sources by using the at least two microphones, where a first mixed signal of the at least two mixed signals is received by using a first microphone of the at least two microphones, the first mixed signal of the at least two mixed signals includes at least two sound signals, the at least two sound signals are in a one-to-one correspondence to the at least two sound sources, and each sound signal comes from a corresponding sound source; and obtaining, by the electronic device, a target sound signal from the target sound source according to the first indication information and the at least two mixed signals. The first microphone of the at least two microphones is located at the top of the electronic device, and a second microphone of the at least two microphones is located at the bottom of the electronic device; or the at least two microphones are both located on a front side or a back side of the electronic device, and a distance between the first microphone of the at least two microphones and a second microphone of the at least two microphones is between 100 millimeters and 150 millimeters; or the first microphone of the at least two microphones is located on a front side of the electronic device, a second microphone of the at least two microphones is located on a back side of the electronic device, and a distance between the first microphone and the second microphone is greater than 18 millimeters. The direction of the target sound source relative to the electronic device, determined according to the first indication information, may be referred to as a sound pickup direction.

Sound signals are picked up by using the at least two microphones, and the target sound signal from the target sound source is obtained according to the direction, indicated by the first indication information, of the target sound source relative to the electronic device. Compared with using a paraboloidal sound collection hood in the prior art, the solution in the present invention reduces a size significantly by using existing microphones of the electronic device, so that the electronic device is easily integrated into an existing portable electronic device.

With reference to the second aspect, in a first possible implementation of the second aspect, the electronic device has a touchscreen, and the touchscreen is configured to present a graphical user interface GUI, and the obtaining, by the electronic device, first indication information includes: presenting, by the electronic device by using the GUI, a schematic direction screen on which the electronic device is used as a center; detecting, by the electronic device, a first operation performed by a user on the touchscreen; and in response to the first operation, displaying the target sound source on the schematic direction screen presented in the GUI, where the first operation includes a touch and a drag; and determining, by the electronic device based on a direction that is of the target sound source relative to the electronic device and that is presented on the schematic direction screen, the first indication information.

The direction of the target sound source relative to the electronic device can be determined by performing an operation in the GUI. This is convenient and easy to operate.

With reference to the foregoing possible implementation of the second aspect, in a second possible implementation of the second aspect, the obtaining, by the electronic device, a target sound signal from the target sound source according to the first indication information and the at least two mixed signals includes: obtaining, by the electronic device, the target sound signal from the target sound source according to the first indication information, the at least two mixed signals, and sound pickup distances of the at least two microphones.

The sound pickup distances of the microphones may be determined according to sensitivity of the microphones. Therefore, after a sound pickup direction is determined, the sound signal of the target sound source can be picked up according to the sound pickup direction.

With reference to the foregoing possible implementation of the second aspect, in a second possible implementation of the second aspect, the method further includes: detecting, by the electronic device, a second operation performed by the user on a region, on the touchscreen, corresponding to the target sound source; and in response to the second operation, displaying, on the schematic direction screen presented in the GUI, a distance between the target sound source and the electronic device, where the second operation includes a touch and a drag; and determining, by the electronic device, second indication information according to the distance between the target sound source and the electronic device, where the distance is displayed in the GUI, and the second indication information is used to indicate the distance between the target sound source and the electronic device; and the obtaining, by the electronic device, a target sound signal from the target sound source according to the first indication information includes: obtaining, by the electronic device, the target sound signal from the target sound source according to the first indication information, the second indication information, and the at least two mixed signals. A reception range of a microphone, determined according to the second indication information, may be referred to as a sound pickup distance.

The sound pickup distance of the microphone may be controlled within a desired reception range of the user by setting the sound pickup distance by performing an operation in the GUI, so that interference from another sound source is reduced and sound signal quality is improved.

With reference to the foregoing possible implementations of the second aspect, in a fourth possible implementation of the second aspect, the method further includes: processing, by the electronic device, the target sound signal, generating an output signal, and playing or recording the output signal.

A directional playback or directional recording function can be implemented by using the foregoing sound signal collection method.

According to a third aspect, this application provides a positioning apparatus, configured to execute the method in any one of the first aspect or the possible implementations of the first aspect. Specifically, the apparatus includes units configured to execute any one of the first aspect or the possible implementations of the first aspect.

According to a fourth aspect, this application provides a sound signal collection apparatus, configured to execute the method in any one of the second aspect or the possible implementations of the second aspect. Specifically, the apparatus includes units configured to execute any one of the second aspect or the possible implementations of the second aspect.

According to a fifth aspect, this application provides a positioning device, where the device includes a touchscreen, a processor, a memory, and a bus system. The touchscreen, the processor, and the memory are connected by using the bus system. The memory is configured to store a software program or a module. The processor may run or execute the software program and/or the module stored in the memory, and invoke data stored in the memory to implement various functions and/or data processing of the device.

According to a sixth aspect, this application provides a sound signal collection device, where the device includes a touchscreen, a processor, at least two microphones, a memory, and a bus system. The touchscreen, the processor, the at least two microphones, and the memory are connected by using the bus system. The memory is configured to store a software program or a module. The processor may run or execute the software program and/or the module stored in the memory, and invoke data stored in the memory to implement various functions and/or data processing of the device.

According to a seventh aspect, this application provides a computer-readable medium, configured to store a computer program, where the computer program includes an instruction used to execute the method in any one of the first aspect or the possible implementations of the first aspect.

According to an eighth aspect, this application provides a computer-readable medium, configured to store a computer program, where the computer program includes an instruction used to execute the method in any one of the second aspect or the possible implementations of the second aspect.

This application provides the sound signal collection method and apparatus, to reduce the size of the directional monitoring device, so that the directional monitoring device is applicable to the portable electronic device.

### BRIEF DESCRIPTION OF DRAWINGS

To describe the technical solutions in the embodiments of the present invention more clearly, the following briefly describes the accompanying drawings required for describing the embodiments of the present invention. Apparently, the following accompanying drawings in the following description show merely some embodiments of the present invention, and a person of ordinary skill in the art may still derive other drawings from these accompanying drawings without creative efforts.
FIG. 1 is a schematic flowchart of a positioning method according to an embodiment of the present invention;
FIG. 2a is a schematic diagram of a screen displayed in a GUI according to an embodiment of the present invention;
FIG. 2b is another schematic diagram of a screen displayed in a GUI according to an embodiment of the present invention;
FIG. 3 is still another schematic diagram of a screen displayed in a GUI according to an embodiment of the present invention;
FIG. 4 is a schematic flowchart of a sound signal collection method according to an embodiment of the present invention;
FIG. 5 is a schematic structural diagram of a directional monitoring device according to an embodiment of the present invention;
FIG. 6 is a schematic diagram of routes from different sound sources to different microphones on a same plane;
FIG. 7 is a schematic block diagram of a positioning apparatus according to an embodiment of the present invention;
FIG. 8 is a schematic block diagram of a sound signal collection apparatus according to an embodiment of the present invention;
FIG. 9 is a schematic block diagram of a positioning device according to an embodiment of the present invention; and
FIG. 10 is a schematic block diagram of a sound signal collection device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

To resolve a prior-art problem that a directional monitoring device is too large to be applied to a portable electronic device, the present invention provides a sound signal collection method and apparatus that can be applied to an electronic device or another monitoring device. Specifically, the sound signal collection apparatus may be disposed in a directional monitoring device, and the directional monitoring device may be disposed in the electronic device. Therefore, compared with the directional monitoring device in the prior art, the directional monitoring device in the embodiments of the present invention is much smaller in size, and can be well integrated into an existing electronic device.

In the technical solution of the present invention, the electronic device may include but is not limited to a mobile phone, a notebook computer, a tablet computer, or the like.

It should be noted that, in addition to the directional monitoring device, the electronic device according to the embodiments of the present invention may further include another structure or component (for example, a camera or a chip), to implement a corresponding function. For brevity, the another structure is not described in detail in the embodiments of the present invention.

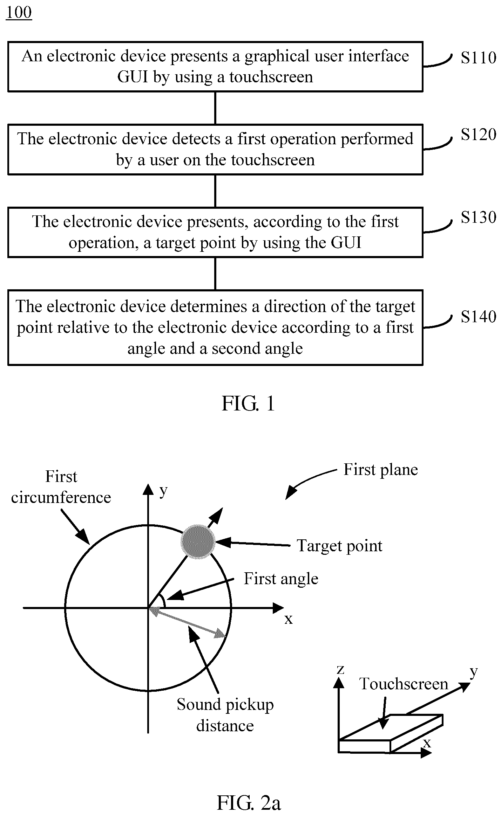

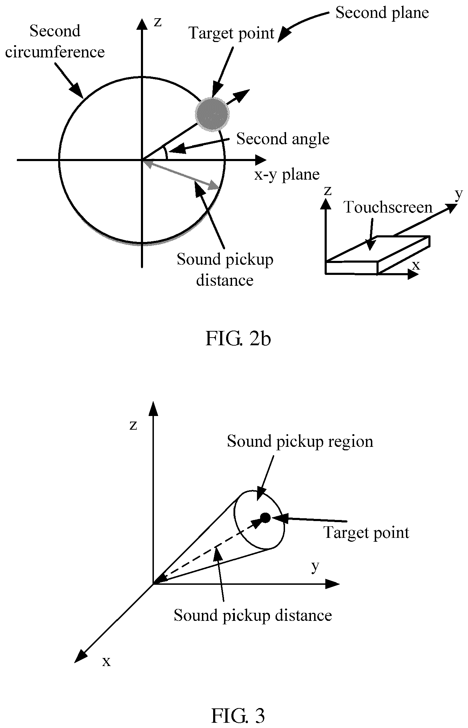

For ease of understanding and description, a positioning method according to an embodiment of the present invention is first described in detail with reference to FIG. 1 and FIG. 3.

FIG. 1 is a schematic flowchart of the positioning method 100 according to this embodiment of the present invention. The method 100 may be applied to an electronic device having a touchscreen. The method shown in FIG. 1 may be executed by a positioning apparatus, for example, the electronic device having the touchscreen. This is not particularly limited in the present invention.

It should be understood that, FIG. 1 shows detailed communication steps or operations of the positioning method according to this embodiment of the present invention from a perspective of the electronic device. However, these steps or operations are merely examples, and another operation or variations of the operations in FIG. 1 may be further performed in this embodiment of the present invention. In addition, the steps in FIG. 1 may be performed in a sequence different from that presented in FIG. 1, and possibly not all of the operations in FIG. 1 need to be performed.

As shown in FIG. 1, the method 100 includes the following steps.

S110. The electronic device presents a graphical user interface GUI by using the touchscreen.

Specifically, the GUI (Graphical User Interface, "GUI" for short) includes a first axis, a second axis, and a third axis with a position of the electronic device as an intersection point (for ease of understanding and description, marked as a first intersection point). Any two axes of the first axis, the second axis, or the third axis are perpendicular to each other, and intersect at the first intersection point. The first axis and the second axis determine a first plane, and the third axis and the first plane determine a second plane. The first plane may be used to represent a horizontal plane, and the second plane may be used to represent a vertical plane. Alternatively, the first plane may be used to represent a vertical plane, and the second plane may be used to represent a horizontal plane. This is not particularly limited in the present invention. Therefore, the first axis, the second axis, and the third axis form three-dimensional space with the first intersection point as a center. The GUI may present a plane (for example, the first plane or the second plane) of the three-dimensional space, or may present a screen representing the three-dimensional space.

S120. The electronic device detects a first operation performed by a user on the touchscreen, where the first operation includes a touch and a drag.

Specifically, the electronic device may detect an operation performed on the first plane and an operation performed on the second plane by the user on the touchscreen. When the first plane and the second plane are displayed on the screen presented in the GUI, the user may touch a corresponding region of the first plane in the GUI (a point that the user touches on the screen may be referred to as a touch point), and drag a touch point on the first plane, so as to move a target point and finally determine a position of the target point on the first plane; and touch a corresponding region of the second plane in the GUI, and drag a touch point on the second plane, so as to move the target point and finally determine a position of the target point on the second plane. When three-dimensional space is displayed on the screen presented in the GUI, the user may similarly enter a position of the target point in the three-dimensional space by means of touching and dragging. A difference lies in that, when the first plane and the second plane are displayed on the screen presented in the GUI, the first operation includes the operation performed on the corresponding region of the first plane on the touchscreen and the operation performed on the corresponding region of the second plane on the touchscreen; when the three-dimensional space is displayed on the screen presented in the GUI, the first operation includes an operation performed on a corresponding region of the three-dimensional space on the touchscreen.

S130. The electronic device presents, according to the first operation, a target point by using the GUI.

In this embodiment of the present invention, the user may determine a display position of the target point in the GUI by using the first operation, so as to present the target point in the GUI. A sound pickup distance of the electronic device may be preset. After the sound pickup distance is determined, a direction of the target point relative to the electronic device is directly entered by using the first operation, so that the display position of the target point in the GUI can be determined.

Specifically, the electronic device may determine, as a first angle, an angle formed by the first axis and a projection of a connection line (for ease of differentiation and understanding, marked as a first connection line) between the target point and the first intersection point on the first plane; determine, as a second angle, an angle formed by the third axis and a projection of the connection line (for ease of differentiation and understanding, marked as a second connection line) between the target point and the first intersection point on the second plane; and display the first angle on the first plane and the second angle on the second plane by using the GUI.

It should be understood that, the first angle and the second angle are two parametric values representing a relative position relationship between the target point and the electronic device. The first angle may be an included angle between the projection of the first connection line on the first plane and the first axis, or may be an included angle between the projection of the first connection line on the first plane and the second axis. Likewise, the second angle may be an included angle between the projection of the second connection line on the second plane and the third axis, or may be an included angle between the projection of the second connection line on the second plane and a fourth axis. This is not particularly limited in the present invention.

S140. The electronic device determines a direction of the target point relative to the electronic device according to a first angle and a second angle.

After determining the first angle and the second angle, the electronic device may determine the direction of the target point relative to the electronic device.

Optionally, the GUI further includes a first circumference presented on the first plane and with the first intersection point as a center, and a second circumference presented on the second plane and with the first intersection point as a center. The first circumference and the second circumference are circumferences with a same radius. The target point is presented on the first circumference on the first plane, and the target point is presented on the second circumference on the second plane.

The method 100 further includes:
detecting, by the electronic device, a second operation performed by the user on the target point on the first circumference, so that a radius of the first circumference varies with movement of the target point, where the second operation includes a touch and a drag;
determining, by the electronic device, the radius of the first circumference according to the second operation, and displaying the radius of the first circumference by using the touchscreen; and
determining, by the electronic device, a distance between the target point and the electronic device according to the radius of the first circumference; or
detecting, by the electronic device, a third operation performed by the user on the target point on the second circumference, so that a radius of the second circumference varies with movement of the target point, where the third operation includes a touch and a drag;
determining, by the electronic device, the radius of the second circumference according to the third operation, and displaying the radius of the second circumference by using the touchscreen; and
determining, by the electronic device, a distance between the target point and the electronic device according to the radius of the second circumference.

Specifically, the sound pickup distance of the electronic device may be represented by using the radius of the first circumference or the radius of the second circumference. The sound pickup distance of the electronic device may be preset, or may be adjusted according to an actual status in a sound pickup process. In this embodiment of the present invention, the user adjusts the sound pickup distance of the electronic device by touching and dragging the target point on the first circumference or the second circumference. Specifically, when the user drags the target point towards the center, the first circumference or the second circumference is scaled down along a dragging direction, and the radius of the circumference becomes smaller. When the user drags the target point against the center, the first circumference or the second circumference is scaled up along a dragging direction, and the radius of the circumference becomes larger. In addition, a method for displaying the radius in the GUI may be used, so that the user can learn the distance between the target point and the electronic device and perform further adjustment.

For ease of understanding, the screen displayed in the GUI is described in detail with reference to FIG. 2 (including FIG. 2a and FIG. 2b) and FIG. 3.

First, assuming that the electronic device is a center of the coordinate system, a display screen of the electronic device may be parallel to a horizontal plane, or may be parallel to a direction of gravity. This is not particularly limited in the present invention.

FIG. 2a is a schematic diagram of the screen displayed in the GUI according to this embodiment of the present invention.

Specifically, FIG. 2a is a schematic diagram of the first plane displayed in the GUI. As shown in FIG. 2a, the first plane (for example, an x-y plane shown in FIG. 2a) is determined by using the first axis (for example, an x-axis shown in FIG. 2a) and the second axis (for example, a y-axis shown in FIG. 2a). The first plane may be used to represent the horizontal plane. In this embodiment of the present invention, assuming that the electronic device is placed horizontally, the first plane may be used to represent a plane parallel to the touchscreen of the electronic device.

FIG. 2b is another schematic diagram of the screen displayed in the GUI according to this embodiment of the present invention.

Specifically, FIG. 2b is a schematic diagram of the second plane displayed in the GUI. As shown in FIG. 2b, the second plane (for example, a z-xy plane shown in FIG. 2b) is determined by using the third axis (for example, a z-axis shown in FIG. 2b) and the first plane (for example, an x-y plane shown in FIG. 2b). The second plane may be used to represent a vertical plane. In this embodiment of the present invention, assuming that the electronic device is placed horizontally, the second plane may be used to represent a plane vertical to the touchscreen of the electronic device.

The position of the target point may include an included angle between a connection line between the target point and the center and each axis (the x-axis, the y-axis, and the z-axis), or may include a distance between the target point and the center, and an included angle between a connection line between the target point and the center and each axis (the x-axis, the y-axis, and the z-axis), such as the first angle and the second angle.

The direction of the target point relative to the electronic device may be determined according to the first angle on the x-y plane shown in FIG. 2a and the second angle on the z-xy plane. In this embodiment of the present invention, the direction of the target point relative to the electronic device may be referred to as the sound pickup direction. The sound pickup direction may be implemented by touching, by the user, the GUI and dragging the target point presented in the GUI or a projection of the target point.

Further, the user may adjust the sound pickup distance by dragging the target point on the first circumference or the second circumference in FIG. 2a or FIG. 2b. The method for adjusting the sound pickup distance by dragging the target point on the first circumference or the second circumference by the user has been described above in detail. For brevity, details are not described herein again.

FIG. 3 is still another schematic diagram of the screen displayed in the GUI according to this embodiment of the present invention.

Specifically, FIG. 3 is a schematic diagram of the screen displayed in the GUI, for representing three-dimensional space. The three-dimensional space is determined by the first axis (for example, an x-axis in FIG. 3), the second axis (for example, a y-axis in FIG. 3), and the third axis (for example, a z-axis in FIG. 3). The position, relative to the electronic device, of the target point in the three-dimensional space may be determined according to a sound pickup angle and the sound pickup distance entered by the user in FIG. 2a and FIG. 2b.

The user may further perform an operation on the screen shown in FIG. 2a and FIG. 2b according to the position of the target point relative to the electronic device shown in FIG. 3, to adjust the position of the target point, for example, adjusting the distance between the target point and the electronic device, the first angle, or the second angle. The position of the target point is accurately indicated with reference to FIG. 2a, FIG. 2b, and FIG. 3.

It should be understood that, the user may directly enter the target point by using the screen of the three-dimensional space shown in FIG. 3, to adjust the direction of the target point relative to the electronic device (or the sound pickup angle) and the sound pickup distance. This is not particularly limited in the present invention. A method for adjusting the sound pickup angle and the sound pickup distance by using the screen of the three-dimensional space is similar to the methods for adjusting the sound pickup angle and the sound pickup distance on the first plane and the second plane. Details have been described above, and for brevity, are not repeated herein. It should be noted that, a module for entering position information of a target sound source by using the GUI and for processing the position information by using an AP may be understood as application software (Application, "APP" for short) in the electronic device. Like another APP in the electronic device, this APP is stored in a memory of the electronic device.

It should be further understood that, the positioning method described in this embodiment of the present invention is not limited to being used to determine a position of the target sound source in the case of directional sound pickup, and can also be applied to another positioning scenario.

Therefore, according to the positioning method in this embodiment of the present invention, the user may perform an operation in the GUI, including entering the target point and adjusting a relative angle and a distance between the target point and the electronic device, so that the electronic device determines the position of the target point according to the operation of the user. This is convenient and easy to operate.

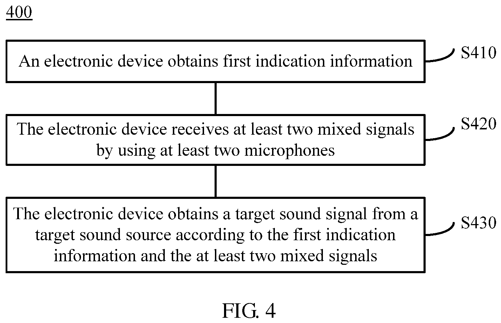

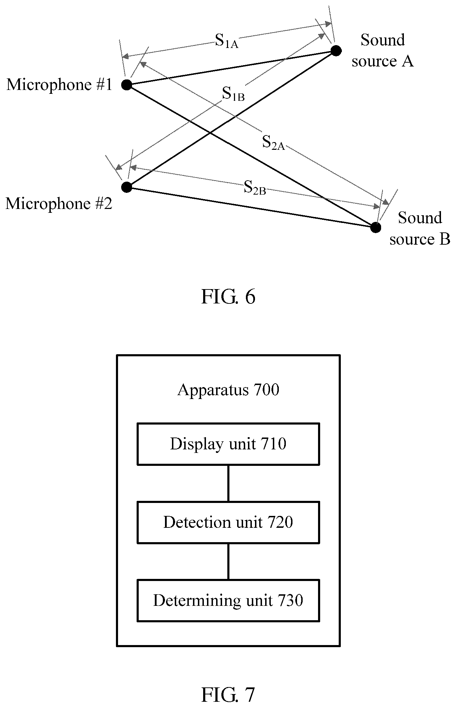

The foregoing details the positioning method according to this embodiment of the present invention with reference to FIG. 1 and FIG. 3. The following details a sound signal collection method according to an embodiment of the present invention with reference to FIG. 4 and FIG. 6.

FIG. 4 is a schematic flowchart of the sound signal collection method 400 according to this embodiment of the present invention. The method 400 may be applied to an electronic device having a touchscreen and at least two microphones. The method shown in FIG. 4 may be executed by a sound signal collection apparatus, for example, a directional monitoring device or an electronic device having a directional monitoring device. This is not particularly limited in the present invention. The at least two microphones may be existing microphones configured in the electronic device, or may be microphones newly added to an existing electronic device.

It should be understood that, FIG. 4 shows detailed communication steps or operations of the sound signal collection method according to this embodiment of the present invention from a perspective of the electronic device. However, these steps or operations are merely examples, and another operation or variations of the operations in FIG. 4 may be further performed in this embodiment of the present invention. In addition, the steps in FIG. 4 may be performed in a sequence different from that presented in FIG. 4, and possibly not all of the operations in FIG. 4 need to be performed.

As shown in FIG. 4, the method 400 includes the following steps.

S410. The electronic device obtains first indication information, where the first indication information is used to indicate a direction of a target sound source of at least two sound sources relative to the electronic device.

S420. The electronic device receives at least two mixed signals by using the at least two microphones, where a first mixed signal of the at least two mixed signals is received by using a first microphone of the at least two microphones, the first mixed signal of the at least two mixed signals includes at least two sound signals, the at least two sound signals are in a one-to-one correspondence to the at least two sound sources, and each sound signal comes from a corresponding sound source.

S430. The electronic device obtains a target sound signal from the target sound source according to the first indication information and the at least two mixed signals.

Specifically, using the electronic device as an example, the at least two microphones are located in different positions of the electronic device. Each microphone is configured to receive sound signals of the at least two sound sources. The sound signals of the at least two sound sources are mixed together, and enter into the microphones in a form of a mixed signal. That is, each microphone is corresponding to one mixed signal, and the at least two sound signals included in each mixed signal are corresponding to the at least two sound sources. For example, a sound source #1 may be corresponding to a sound signal #1, a sound source #2 may be corresponding to a sound signal #2, and a sound source #3 may be corresponding to a sound signal #3. The sound signal #1, the sound signal #2, and the sound signal #3 may be mixed together, to form a mixed signal. The mixed signal may enter into the electronic device by using a microphone #1 and a microphone #2. That is, a signal received by each microphone is a mixed signal, and the mixed signal includes the sound signal #1 from the sound source #1, the sound signal #2 from the sound source #2, and the sound signal #3 from the sound source #3. The electronic device needs to obtain, according to the first indication information indicating the direction of the target sound source, from the mixed signal received by each microphone, the target sound signal corresponding to the target sound source, and then process the target sound signal, to facilitate a user in listening.

Therefore, according to the sound signal collection method in this embodiment of the present invention, sound signals are picked up by using the at least two microphones, and the target sound signal from the target sound source is obtained according to the direction, indicated by the first indication information, of the target sound source relative to the electronic device. Compared with using a paraboloidal sound collection hood in the prior art, the solution in the present invention reduces a size significantly by using existing microphones of the electronic device, so that the electronic device is easily integrated into an existing portable electronic device.

It should be noted that in this embodiment of the present invention, there may be two, three, four, or more microphones. The at least two microphones are located in different positions of a same electronic device. When a distance between the microphones is controlled within a preset range, an effect of directional sound pickup is better.

For example, the first microphone of the at least two microphones is located at the top of the electronic device, and a second microphone of the at least two microphones is located at the bottom of the electronic device. Alternatively, the at least two microphones are both located on a front side or a back side of the electronic device, and a distance between the first microphone of the at least two microphones and a second microphone of the at least two microphones is between 100 millimeters and 150 millimeters. Alternatively, the first microphone of the at least two microphones is located on a front side of the electronic device, a second microphone of the at least two microphones is located on a back side of the electronic device, and a distance between the first microphone and the second microphone is greater than 18 millimeters.

It is proved by experiments that, when the electronic device has four microphones, the microphone #1 and the microphone #2 may be disposed on the front side of the electronic device, and a microphone #3 and a microphone #4 may be disposed on the back side of the electronic device. When a distance between the microphone #1 and the microphone # 2 is between 100 mm and 150 mm, a distance between the microphone #3 and the microphone #4 is between 100 mm and 150 mm, a distance between the microphone #1 and the microphone #3 is greater than 18 mm, and a distance between the microphone #2 and the microphone #4 is greater than 18 mm, an effect of directional sound pickup is optimal.

It should be understood that the enumerated quantity of the microphones and the distances are merely examples for description. This should not be construed as any limitation to the present invention. For example, the electronic device may have only two microphones, located at an upper position and a lower position of the electronic device respectively, or both located on the front side or the back side of the electronic device, with a distance between 100 mm and 150 mm. This is not particularly limited in the present invention.

Optionally, the electronic device has a touchscreen, and the touchscreen is configured to present a graphical user interface GUI.

That the electronic device obtains first indication information includes:
presenting, by the electronic device by using the GUI, a schematic direction screen on which the electronic device is used as a center;
detecting, by the electronic device, a first operation performed by a user on the touchscreen; and in response to the first operation, displaying the target sound source on the schematic direction screen presented in the GUI, where the first operation includes a touch and a drag; and
determining, by the electronic device based on a direction that is of the target sound source relative to the electronic device and that is presented on the schematic direction screen, the first indication information.

In this embodiment of the present invention, the position of the target point of the method 100 may be determined as the position of the target sound source, then the direction of the target sound source relative to the electronic device is determined by using the method 100, and the first indication information is determined. The direction of the target sound source relative to the electronic device, determined according to the first indication information, may be referred to as a sound pickup direction. Correspondingly, in the following description, a distance between the target sound source and the electronic device, determined according to second indication information, may be referred to as a sound pickup distance. The sound pickup direction and the sound pickup distance may be collectively referred to as position information.

It should be understood that, in this embodiment of the present invention, the user may enter direction information of the target sound source by using the GUI, or may control the sound pickup direction by means of voice. This is not particularly limited in the present invention.

It should be understood that, a specific process in which the electronic device determines, by detecting the first operation performed by a user in the GUI, the direction of the target sound source relative to the electronic device is similar to the specific process of determining, based on the first operation performed by the user in the GUI, the direction of the target point relative to the electronic device in the method 100 described above. For brevity, details are not described herein again.

Optionally, that the electronic device obtains a target sound signal from the target sound source according to the first indication information and the at least two mixed signals includes:
obtaining, by the electronic device, the target sound signal according to the first indication information, the at least two mixed signals, and sound pickup distances of the at least two microphones.

Specifically, the sound pickup distance of the microphone may be preset. After the direction of the target sound source is determined, a sound signal may be picked up according to the direction of the target sound source. It should be noted that a value of the sound pickup distance (or a receiving distance) of the microphone may depend on sensitivity of the microphone.

Further, the method 400 further includes:
detecting, by the electronic device, a second operation performed by the user on a region corresponding to the target sound source on the touchscreen; and in response to the second operation, displaying, on the schematic direction screen presented in the GUI, a distance between the target sound source and the electronic device, where the second operation includes a touch and a drag; and
determining, by the electronic device, second indication information according to the distance between the target sound source and the electronic device, where the distance is displayed in the GUI, and the second indication information is used to indicate the distance between the target sound source and the electronic device; and
the obtaining, by the electronic device, a target sound signal from the target sound source according to the first indication information and the at least two mixed signals includes:
   obtaining, by the electronic device, the target sound signal from the target sound source according to the first indication information, the second indication information, and the at least two mixed signals.

It should be understood that a specific process of determining, by the electronic device, the distance between the target sound source and the electronic device by detecting the second operation performed by the user in the GUI is similar to the specific process of determining the distance between the target point and the electronic device based on the second operation or a third operation performed by the user in the GUI in the foregoing method 100. For brevity, details are not described herein again.

In this embodiment of the present invention, although the sound pickup distance of the microphone may be preset, if the distance between the target sound source and the electronic device is far less than the sound pickup distance of the microphone, interference from a sound signal at a farther distance may be received. Therefore, the user may determine the sound pickup distance according to the distance between the target sound source and the electronic device, for example, by using a method of visual observation or laser ranging, and then further adjust the distance between the target sound source and the electronic device by using the UI, so that the sound pickup distance of the microphone is controlled within a distance range indicated by the second indication information. This can reduce noise interference and improve sound signal quality.

Therefore, according to the sound signal collection method in this embodiment of the present invention, sound signals are picked up by using the at least two microphones, and the target sound signal from the target sound source is obtained according to the direction, indicated by the first indication information, of the target sound source relative to the electronic device. Compared with using a paraboloidal sound collection hood in the prior art, the solution in the present invention reduces a size significantly by using the existing microphones of the electronic device, so that the electronic device is easily integrated into an existing portable electronic device.

Optionally, the method 400 further includes:
processing, by the electronic device, the target sound signal, generating an output signal, and playing or recording the output signal.

In this embodiment of the present invention, after obtaining the target sound signal, the electronic device may further process the target sound signal, that is, use the target sound signal as an input signal and perform processing on the input signal, such as signal amplification, analog-to-digital conversion, digital-to-analog conversion, and signal amplification, so that a sound signal of better quality is finally output, to facilitate the user in listening or recording.

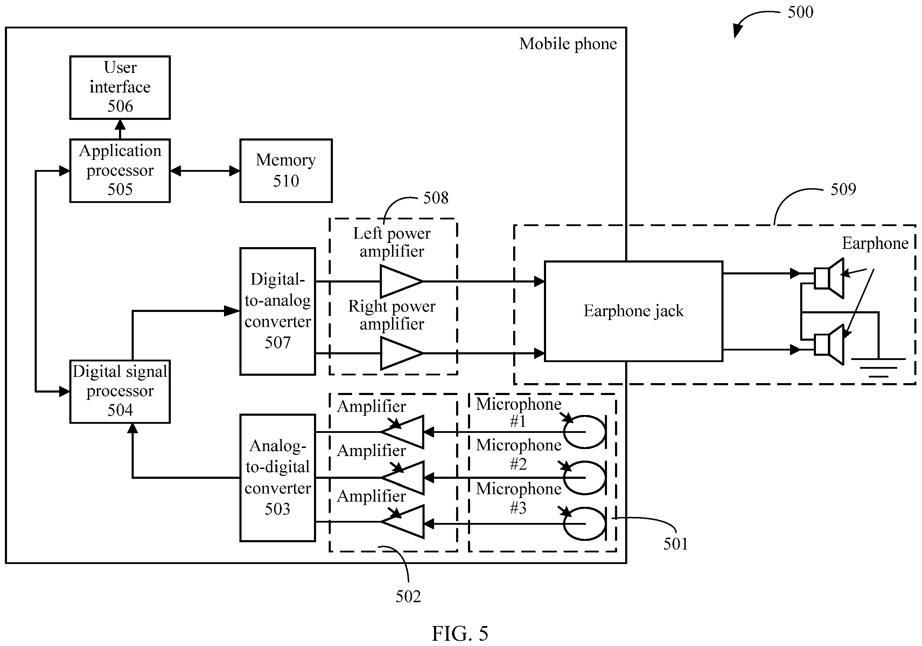

For ease of understanding, the following details the procedures and the steps of the method with reference to a schematic structural diagram of a directional monitoring device shown in FIG. 5.

FIG. 5 is the schematic structural diagram of the directional monitoring device according to this embodiment of the present invention.

FIG. 5 shows a scenario in which the directional monitoring device in this embodiment of the present invention is disposed in a portable electronic device (for example, a mobile phone). As shown in FIG. 5, the directional monitoring device 500 includes: at least two microphones 501, amplifiers (Amplifier, "AMP" for short) 502, an analog-to-digital converter (Analog-to-Digital Converter, "ADC" for short) 503, a digital signal processor (Digital Signal Processing, "DSP" for short) 504, an application processor (Application Processor, "AP" for short) 505, a graphical user interface (GUI) 506, a digital-to-analog converter (Digital-to-Analog Converter, "DAC" for short) 507, a power amplifier (Power Amplifier, "PA" for short) 508, a speaker 509 (for example, an earphone), and a memory 210. The directional monitoring device 500 may be disposed in an electronic device, so that a user sets a sound pickup direction and a sound pickup distance of a target sound source by using the UI of the device, to implement directional monitoring of the microphones.

The following specifically describes functions and connection relationships of modules of the directional monitoring device 500.

Still referring to FIG. 5, the at least two microphones are disposed on an external surface of the electronic device, and the at least two microphones form a microphone array, for example, the microphone array formed by a microphone #1, a microphone #2, and a microphone #3 shown in FIG. 5. A signal from at least two sound sources that is received by using the microphone array is a mixed signal. Each mixed signal includes at least two sound signals, the at least two sound signals are in a one-to-one correspondence to the at least two sound sources, and each sound signal comes from a corresponding sound source.

It should be understood that the microphone array is a group of microphones arranged at a specific distance. The microphone array can achieve better directivity than a single microphone according to time difference information about a sound wave reaching different microphones in the array. A specific method for implementing directional monitoring by using the microphone array is described in detail hereinafter.

It should be further understood that a relative position between the microphones is not limited in the present invention. The at least two microphones may be arranged in parallel in a specific region of the electronic device shown in FIG. 5, or may be distributed in regions of the electronic device. An electronic device in which any two microphones are located in different positions shall fall within the protection scope of the present invention.

It should be further understood that, the enumerated microphones in this embodiment of the present invention are examples of a sound signal pickup apparatus, and should not be construed as any limitation to the present invention. Another sound signal pickup apparatus to which the sound signal collection method in this embodiment of the present invention may be applied shall fall within the protection scope of the present invention.

Each microphone is connected to the ADC by using the amplifier (Amplifier, "AMP" for short), and is finally connected to the DSP by using the ADC. A sound signal output by the microphone is relatively weak, and therefore, the sound signal may be amplified by using the AMP. After amplifying the sound signal, the AMP sends the sound signal to the ADC. The ADC is configured to convert the sound signal collected by each microphone into a digital signal, and then the digital signal is input into the DSP.

In addition, the GUI communicates with the DSP under the control of the AP, and the user can enter, by using the GUI, a parameter for a directional sound pickup algorithm that runs in the DSP. Specifically, the GUI is configured to receive position information of the target sound source entered by the user, such as the sound pickup direction and the sound pickup distance. The GUI sends the position information to the AP. After processing the parameter information, the AP generates the parameter for controlling the directional sound pickup algorithm. The DSP enters the parameter into the directional sound pickup algorithm to perform operation processing.

It should be understood that, the foregoing enumerated specific method for entering the position of the target sound source by using an operation in the GUI is merely an example for description, and should not be construed as any limitation to the present invention. For example, the electronic device may control the sound pickup direction or the sound pickup distance of the microphone array by entering positioning coordinates (for example, Global Positioning System (Global Positioning System, "GPS" for short) coordinates) of the target sound source or entering the position information by means of voice. A specific method for entering the position information of the target sound source by the user is not particularly limited in the present invention.

The following details the specific method for implementing directional monitoring by using the microphone array.

To implement directional monitoring of the microphone array, concepts of beamforming and array directivity are introduced. According to comprehensive processing on signals from all the microphones, the microphone array may be combined as a required strong-directional microphone array, to offer a directivity characteristic of a "beam". The beam of the microphone array may be controlled by using a special circuit or program algorithm software, so that the beam is directed to a sound source direction, to enhance an audio collection effect. A beamforming technique based on algorithm processing can precisely form a cone-shaped space direction (a cone-shaped beam shown in FIG. 4), to receive only a sound from a speaking person while ambient noise and interference are suppressed. By means of algorithm control, the microphone array may direct the beam to the current speaking person after a position of the speaking person is determined, thereby significantly mitigating an effect of surrounding ambient noise and an echo.

It should be noted that, a sound pickup region and the sound pickup distance shown in FIG. 3 are correlated. When the user enters a relatively large sound pickup distance, the cone-shaped beam is long and thin. When the user enters a relatively small sound pickup distance, the cone-shaped beam is short and thick. A correlation between a size of the sound pickup region and the sound pickup distance is similar to that in the prior art. For brevity, details are not described herein.

For ease of understanding and description, the following describes a principle of the directional sound pickup algorithm with reference to FIG. 6.

It should be understood that, FIG. 6 and the following illustrative descriptions are merely used as an example for ease of understanding, and is merely used as an optional implementation for implementing directional monitoring of the microphone array. An implementation process of the directional monitoring is not limited to the method described below. The directional monitoring device in this embodiment of the present invention can support multiple directional sound pickup algorithms, to implement the directional monitoring of the microphone array.

In an implementation, when multiple microphones are located in different positions, moments at which the multiple microphones receive a sound signal from a same sound source are different, that is, a time difference exists. A difference between arrival times from sound sources in different positions to a microphone is different from a difference between arrival times from the sound sources in the different positions to any other microphone. Therefore, different arrival time differences are in a one-to-one correspondence to different sound signals.

FIG. 6 is a schematic diagram of routes from different sound sources to different microphones on a same plane. As shown in FIG. 6, a sound source A and a sound source B are on a same plane but in different positions on the plane. A microphone #1 and a microphone #2 of an electronic device are also located in different positions. A distance between the sound source A and the microphone #1 is S_{1A}, and a distance between the sound source A and the microphone #2 is S_{2A}. S_{1A} is not equal to S_{2A}. A distance between the sound source B and the microphone #1 is S_{1B}, and a distance between the sound source B and the microphone #2 is S_{2B}. S_{1B} is not equal to S_{2B}. An arrival time from the sound source A to the microphone #1 is t_{1A}=S_{1A}/v, and an arrival time from the sound source A to the microphone #2 is t_{2A}=S_{2A}/v, where v is a speed of sound in the air. Speeds of sound in the air are the same, and therefore, t_{1A} is not equal to t_{2A}. Similarly, t_{1B} is not equal to t_{2B}. A difference between the arrival time from the sound source A to the microphone #1 and the arrival time from the sound source A to the microphone #2 is Δt_{A}=|S_{1A}-S_{2A}|/v. A difference between the arrival time from the sound source B to the microphone #1 and the arrival time from the sound source B to the microphone #2 is Δt_{B}=|S_{1B}-S_{2B}|/v. It can be learned that, for different sound sources, provided that route differences are different, differences between arrival times from the different sound sources to a same microphone are also different.

Therefore, after the sound pickup direction and the sound pickup distance of the target sound source are determined, a difference between an arrival time from the target sound source to the microphone #1 and an arrival time from the target sound source to the microphone #2 may be determined by means of calculation. It is assumed that the sound source A in FIG. 6 is the target sound source. In this case, a target sound signal that needs to be picked up is a sound signal, with the difference between the arrival time from the source A to the microphone #1 and the arrival time from the source A to the microphone #2 being Δt_{A}=|S_{1A}-S_{2A}|/v, that is, a target time difference is Δt_{A}.

After determining the target time difference by running the directional sound pickup algorithm, the DSP may perform filtering on a digital signal from the ADC. That is, all digital signals whose time difference is not Δt_{A} are deleted, and only a target digital signal whose time difference is Δt_{A} is kept. After the target digital signal is processed, the processed target digital signal is sent to the DAC. In this case, the digital signal received by the DAC is a digital signal obtained by processing at least two target digital signals by the DSP. The digital signal may be understood as is a digital signal obtained by combining the at least two target digital signals. It should be understood that, there is a correspondence between a time difference for receiving each sound signal by the microphone array and a digital signal corresponding to the sound signal. When receiving a digital signal that is obtained by the ADC by converting a signal from each microphone of the microphone array, the DSP may record an arrival time of the digital signal. After processing is performed, a correspondence between each time difference and a digital signal may be obtained. The time difference may be determined according to the arrival time of each digital signal, and the arrival time of each digital signal may be monitored by the DSP. A specific method for determining the time difference is not limited in the present invention.

Then, the DAC performs analog-to-digital conversion on the digital signal obtained by processing performed by the DSP, and further generates a sound signal that can be received by the user. Then the sound signal is amplified by the PA, and is sent to the earphone through an earphone jack, to facilitate the user in listening. The PA may include a left PA and a right PA. The left PA and the right PA amplify a sound signal to be sent to a left earphone and a right earphone respectively, and then send the amplified sound signal to the left earphone and the right earphone respectively. Alternatively, there may be one PA. The PA amplifies the sound signal, and then sends the amplified sound signal to the left earphone and the right earphone respectively. It should be understood that the enumerated speaker, namely, the earphone, is merely an example for description, and the speaker may be a loudspeaker. A connection relationship between the loudspeaker and the PA is similar to that between the earphone and the PA. For brevity, details are not described herein again.

Therefore, according to this embodiment of the present invention, a function of directional monitoring may be implemented by using a portable electronic device.

However, it is also found that, if only two microphones are set, |S_{1A}-S_{2A}|=|S_{1B}-S_{2B}| may occur. That is, a difference between the arrival time from the sound source A to the microphone #1 and the arrival time from the sound source A to the microphone #2 may be the same as a difference between the arrival time from the sound source B to the microphone #1 and the arrival time from the sound source B to the microphone #2. Therefore, a problem of the same arrival time differences caused by the same route differences can be resolved by disposing more microphones.

Specifically, when three or more microphones in different positions receive sound signals from sound sources (for example, the sound source A and the sound source B) in different positions on a same plane, it is impossible that route differences from the sound source A to the three or more microphones in the different positions are completely the same as route differences from the sound source B to the three or more microphones in the different positions. That is, it is impossible that the time differences are completely the same. It should be understood that, a specific method for directional sound pickup by using the three or more microphones in this embodiment of the present invention is similar to the specific method for directional sound pickup by using the two microphones described above. For brevity, details are not described herein again.

In this embodiment of the present invention, the three or more microphones are disposed for sound pickup, so that a sound signal from a non-target sound source is excluded more accurately, thereby achieving a better noise reduction effect.

Optionally, the GUI may be further configured to display a spectrum and a sound pressure level of a picked-up sound.

Specifically, according to the pick-up sound spectrum and sound pressure level that are displayed in real time by using the user interface, a volume and audio quality of the sound signal may be determined, and then sound quality may be determined. The sound quality is used as a feedback, and the sound pickup direction and the sound pickup distance may be adjusted in real time according to the sound quality, so that a sound signal of better quality is obtained.

In addition, the user may use a frequently-monitored sound source as the target sound source, and stores position information (that is, the sound pickup distance and the sound pickup direction) of the target sound source in the AP, so that the user can invoke the position information at any time.

For example, the user usually attends a lecture in a specific position of a classroom, a position of a sound source relative to the user is fixed. Therefore, a sound pickup direction and a sound pickup distance that are set when sound quality is optimal may be stored in an electronic device (for example, a mobile phone) carried with the user, so that the user can invoke the sound pickup direction and the sound pickup distance at any time, easily and flexibly.

Further, the user may perform recording while monitoring.

The foregoing scenario is still used as an example. The user may record the lecture by using the directional monitoring device while in class, and may listen to key content repeatedly after class. This provides convenience for study.

Therefore, in the directional monitoring device in this embodiment of the present invention, sound signals are picked up by using the at least two microphones, the sound pickup direction and the sound pickup distance are set by using the GUI, and the signals from the at least two microphones are processed by using the DSP, so that the sound signal from the target sound source is obtained, and directional monitoring is implemented. In addition, as existing microphones of the electronic device are used, a size is small, and the electronic device is easily integrated into an existing portable electronic device.

The foregoing details the positioning method and the sound signal collection method according to the embodiments of the present invention with reference to FIG. 1 and

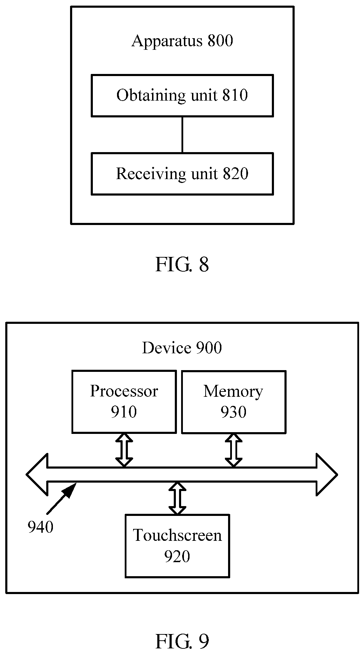

FIG. 6. The following details a positioning apparatus and a sound signal collection apparatus according to the embodiments of the present invention with reference to FIG. 7 and FIG. 8.

FIG. 7 is a schematic block diagram of a positioning apparatus 700 according to an embodiment of the present invention. The apparatus 700 has a touchscreen. The apparatus 700 includes a display unit 710, a detection unit 720, and a determining unit 730.

The display unit 710 is configured to present a graphical user interface GUI by using the touchscreen. The GUI includes a first axis, a second axis, and a third axis with a position of the electronic device as an intersection point, any two axes of the first axis, the second axis, or the third axis are perpendicular to each other, the first axis and the second axis form a first plane, and the third axis and the first plane form a second plane.

The detection unit 720 is configured to detect a first operation performed by a user on the touchscreen. The first operation includes a touch and a drag.

The display unit 710 is further configured to present, according to the first operation, a target point by using the GUI.

The determining unit 730 is configured to: determine, as a first angle, an angle formed by the first axis and a projection of a connection line between the target point and the first intersection point on the first plane; determine, as a second angle, an angle formed by the third axis and a projection of the connection line between the target point and the first intersection point on the second plane; and determine a direction of the target point relative to the electronic device according to the first angle and the second angle.

Optionally, the display unit 710 is further configured to present, on the first plane, a first circumference with the intersection point as a center, and present, on the second plane, a second circumference with the intersection point as a center. The first circumference and the second circumference are circumferences with a same radius. The target point is presented on the first circumference on the first plane, and the target point is presented on the second circumference on the second plane.

The detection unit 720 is further configured to detect a second operation performed by the user on the target point on the first circumference, so that a radius of the first circumference varies with movement of the target point. The second operation includes a touch and a drag.

The determining unit 730 is further configured to: determine the radius of the first circumference according to the second operation, and display the radius of the first circumference by using the touchscreen; and determine a distance between the target point and the electronic device according to the radius of the first circumference.

Alternatively, the detection unit 720 is further configured to detect a third operation performed by the user on the target point on the second circumference, so that a radius of the second circumference varies with movement of the target point. The third operation includes a touch and a drag.

The determining unit 730 is further configured to: determine the radius of the second circumference according to the third operation, and display the radius of the second circumference by using the touchscreen; and determine a distance between the target point and the electronic device according to the radius of the second circumference.

The positioning apparatus 700 according to this embodiment of the present invention may be corresponding to the electronic device in the positioning method in the embodiments of the present invention. In addition, units in the apparatus 700 and other operations and/or functions described above are used to implement corresponding procedures of the method in FIG. 1. For brevity, details are not described herein.

Therefore, according to the positioning apparatus in this embodiment of the present invention, the user performs an operation in the GUI, including entering the target point and adjusting a relative angle and a distance between the target point and the electronic device, so that the electronic device determines a position of the target point according to the operation of the user. This is convenient and easy to operate.

FIG. 8 is a schematic block diagram of a sound signal collection apparatus 800 according to an embodiment of the present invention. The apparatus 800 has at least two microphones. As shown in FIG. 8, the apparatus 800 includes an obtaining unit 810 and a receiving unit 820.

The obtaining unit 810 is configured to obtain first indication information. The first indication information is used to indicate a direction of a target sound source of at least two sound sources relative to the apparatus 800.

The receiving unit 820 is configured to receive at least two mixed signals by using at least two microphones. A first mixed signal of the at least two mixed signals is received by using a first microphone of the at least two microphones, the first mixed signal of the at least two mixed signals includes at least two sound signals, the at least two sound signals are in a one-to-one correspondence to the at least two sound sources, and each sound signal comes from a corresponding sound source.

The obtaining unit 810 is further configured to obtain a target sound signal from the target sound source according to the first indication information and the at least two mixed signals.

The first microphone of the at least two microphones is located at the top of the apparatus, and a second microphone of the at least two microphones is located at the bottom of the apparatus. Alternatively, the at least two microphones are both located on a front side or a back side of the apparatus, and a distance between the first microphone of the at least two microphones and a second microphone of the at least two microphones is between 100 millimeters and 150 millimeters. Alternatively, the first microphone of the at least two microphones is located on a front side of the apparatus, a second microphone of the at least two microphones is located on a back side of the apparatus, and a distance between the first microphone and the second microphone is greater than 18 millimeters.

Optionally, the obtaining unit 810 is specifically configured to obtain the target sound signal from the target sound source according to the first indication information, the at least two mixed signals, and sound pickup distances of the at least two microphones.

Optionally, the apparatus 800 is further has a touchscreen, and the touchscreen is configured to present a graphical user interface GUI. The apparatus 800 further includes a display unit, a detection unit, and a determining unit.

The display unit is configured to present, by using the GUI, a schematic direction screen on which the apparatus is used as a center.

The detection unit is configured to detect a first operation performed by a user on the touchscreen. The first operation includes a touch and a drag.

The determining unit is configured to determine, based on the direction that is of the target sound source relative to the apparatus and that is presented on the schematic direction screen, the first indication information.

Optionally, the detection unit is further configured to detect a second operation performed by the user on a region corresponding to the target sound source on the touchscreen. The second operation includes a touch and a drag.

The display unit is further configured to: in response to the second operation, display, on the schematic direction screen presented in the GUI, a distance between the target sound source and the apparatus.

The determining unit is further configured to determine second indication information according to the distance between the target sound source and the apparatus, where the distance is displayed by the display unit by using the GUI. The second indication information is used to indicate the distance between the target sound source and the apparatus.

The obtaining unit 810 is specifically configured to obtain the target sound signal from the target sound source according to the first indication information, the second indication information, and the at least two mixed signals.

Optionally, the apparatus 800 further includes a processing unit, configured to: process the target sound signal, generate an output signal, and play or record the output signal.

The data transmission apparatus 800 according to this embodiment of the present invention may be corresponding to the electronic device in the data transmission method in the embodiments of the present invention. In addition, units in the apparatus 800 and other operations and/or functions described above are used to implement corresponding procedures of the method in FIG. 2. For brevity, details are not described herein.

Therefore, according to the sound signal collection apparatus in this embodiment of the present invention, sound signals are picked up by using the at least two microphones, and the target sound signal from the target sound source is obtained according to the direction, indicated by the first indication information, of the target sound source relative to the electronic device. Compared with using a paraboloidal sound collection hood in the prior art, the solution in the present invention reduces a size significantly by using existing microphones of the electronic device, so that the electronic device is easily integrated into an existing portable electronic device.

The foregoing details the positioning apparatus and the sound signal collection apparatus according to the embodiments of the present invention with reference to FIG. 7 and

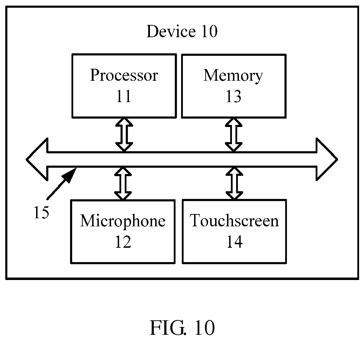

FIG. 8. The following details a positioning device and a sound signal collection device according to the embodiments of the present invention with reference to FIG. 9 and FIG. 10.

FIG. 9 is a schematic block diagram of a positioning device 900 according to an embodiment of the present invention. As shown in FIG. 9, the device 900 includes a processor 910, a touchscreen 920, a memory 930, and a bus system 940. The processor 910, at least two microphones 920, and the memory 930 are connected by using the bus system 940.

The touchscreen 920 is configured to: present a graphical user interface GUI, where the GUI includes a first axis, a second axis, and a third axis with a position of the electronic device as an intersection point, any two axes of the first axis, the second axis, or the third axis are perpendicular to each other, the first axis and the second axis form a first plane, and the third axis and the first plane form a second plane; detect a first operation performed by a user on the touchscreen 920; and present, based on the first operation, a target point by using the GUI, where the first operation includes a touch and a drag.

The processor 910 is configured to: determine, as a first angle, an angle formed by the first axis and a projection of a connection line between the target point and the first intersection point on the first plane; determine, as a second angle, an angle formed by the third axis and a projection of the connection line between the target point and the first intersection point on the second plane; and determine a direction of the target point relative to the electronic device according to the first angle and the second angle.

It should be understood that the memory 930 may be configured to store a software program or a module. In this case, the processor 11 may run or execute the software program and/or the module stored in the memory, and invoke data stored in the memory to implement various functions and/or data processing of the device 900.

It should be understood that, the processor 910 may include an integrated circuit (Integrated Circuit, IC), for example, may be formed by a single packaged IC, or may be formed by connecting multiple packaged ICs with a same function or different functions. The processor 910 may be a central processing unit (Central Processing Unit, CPU). The processor 910 may be another general-purpose processor, a digital signal processor (DSP), an application-specific integrated circuit (ASIC), a field programmable gate array (FPGA), or another programmable logical device, a discrete gate or transistor logical device, a discrete hardware component, or the like. The general-purpose processor may be a microprocessor, or the processor may be any conventional processor or the like. This is not limited in this embodiment of the present invention.

It should be understood that the touchscreen 920 may include a monitor and a pressure-sensitive surface. The monitor and the pressure-sensitive surface may be separated as, for example, a touch panel and a monitor. The touchscreen 920 may be a combination of a sensor, a monitor, and a pressure-sensitive surface, that is, a pressure-sensitive touchscreen. The sensor, the monitor, and the pressure-sensitive surface may be separated, or may be combined pairwise to form, for example, the touchscreen and a pressure panel, or a pressure screen and a touch panel, or a monitor and a pressure touch panel. This is not limited in this embodiment of the present invention.

Optionally, the touchscreen 920 is further configured to: present, on the first plane, a first circumference with the intersection point as a center, and present, on the second plane, a second circumference with the intersection point as a center, where the first circumference and the second circumference are circumferences with a same radius, the target point is presented on the first circumference on the first plane, and the target point is presented on the second circumference on the second plane; and detect a second operation performed by the user on the target point on the first circumference, so that a radius of the first circumference varies with movement of the target point, where the second operation includes a touch and a drag.

The processor 910 is further configured to: determine the radius of the first circumference according to the second operation, and display the radius of the first circumference by using the touchscreen; and determine a distance between the target point and the electronic device according to the radius of the first circumference.

Alternatively, the touchscreen 920 is further configured to detect a third operation performed by the user on the target point on the second circumference, so that a radius of the second circumference varies with movement of the target point. The third operation includes a touch and a drag.

The processor 910 is further configured to: determine the radius of the second circumference according to the third operation, and display the radius of the second circumference by using the touchscreen; and determine a distance between the target point and the electronic device according to the radius of the second circumference.

The positioning device 900 according to this embodiment of the present invention may be corresponding to the electronic device in the positioning method in the embodiments of the present invention. In addition, units in the device 900 and other operations and/or functions described above are used to implement corresponding procedures of the method in FIG. 1. For brevity, details are not described herein.

Therefore, according to the positioning device in this embodiment of the present invention, the user performs an operation in the GUI, including entering the target point and adjusting a relative angle and a distance between the target point and the electronic device, so that the electronic device determines a position of the target point according to the operation of the user. This is convenient and easy to operate.

FIG. 10 is a schematic block diagram of a sound signal collection device 10 according to an embodiment of the present invention. As shown in FIG. 10, the device includes a processor 11, at least two microphones 12, a memory 13, and a bus system 14. The processor 11, the at least two microphones 12, and the memory 13 are connected by using the bus system 14.

The processor 11 is configured to obtain first indication information. The first indication information is used to indicate a direction of a target sound source of at least two sound sources relative to the device.

The at least two microphones 12 are configured to receive at least two mixed signals. A first mixed signal of the at least two mixed signals is received by using a first microphone of the at least two microphones, the first mixed signal of the at least two mixed signals includes at least two sound signals, the at least two sound signals are in a one-to-one correspondence to the at least two sound sources, and each sound signal comes from a corresponding sound source.

The processor 11 is further configured to obtain a target sound signal from the target sound source according to the first indication information and the at least two mixed signals.

The first microphone of the at least two microphones 12 is located at the top of the device, and a second microphone of the at least two microphones is located at the bottom of the device. Alternatively, the at least two microphones are both located on a front side or a back side of the device, and a distance between the first microphone of the at least two microphones and a second microphone of the at least two microphones is between 100 millimeters and 150 millimeters. Alternatively, the first microphone of the at least two microphones is located on a front side of the device, a second microphone of the at least two microphones is located on a back side of the device, and a distance between the first microphone and the second microphone is greater than 18 millimeters.

It should be understood that the memory 13 may be configured to store a software program or a module. In this case, the processor 11 may run or execute the software program and/or the module stored in the memory, and invoke data stored in the memory to implement various functions and/or data processing of the device 10.

It should be understood that, the processor 11 may include an integrated circuit (Integrated Circuit, IC), for example, may be formed by a single packaged IC, or may be formed by connecting multiple packaged ICs with a same function or different functions. The processor 11 may be a central processing unit (Central Processing Unit, CPU). The processor 11 may be another general-purpose processor, a digital signal processor (DSP), an application-specific integrated circuit (ASIC), a field programmable gate array (FPGA), or another programmable logical device, a discrete gate or transistor logical device, a discrete hardware component, or the like. The general-purpose processor may be a microprocessor, or the processor may be any conventional processor or the like. This is not limited in this embodiment of the present invention.

Optionally, the processor 11 is specifically configured to obtain the target sound signal from the target sound source according to the first indication information, the at least two mixed signals, and sound pickup distances of the at least two microphones 12.

Optionally, the device 10 may further include a touchscreen 14, configured to: present, by using a graphical user interface GUI, a schematic direction screen on which the device is used as a center; detect a first operation performed by a user on the touchscreen 14, where the first operation includes a touch and a drag; and in response to the first operation, display the target sound source on the schematic direction screen presented in the GUI.

The processor 11 is specifically configured to determine, based on the direction that is of the target sound source relative to the device and that is presented on the schematic direction screen, the first indication information.

Optionally, the touchscreen 14 is further configured to: detect a second operation performed by the user on a region, on the touchscreen 14, corresponding to the target sound source, where the second operation includes a touch and a drag; and in response to the second operation, display, on the schematic direction screen presented in the GUI, a distance between the target sound source and the device.

The processor 11 is further configured to: determine second indication information according to the distance between the target sound source and the device, where the distance is displayed by the touchscreen 14 by using the GUI, and the second indication information is used to indicate the distance between the target sound source and the device; and obtain the target sound signal from the target sound source according to the first indication information, the second indication information, and the at least two mixed signals.

It should be understood that the touchscreen 14 may include a monitor and a pressure-sensitive surface. The monitor and the pressure-sensitive surface may be separated as, for example, a touch panel and a monitor. The touchscreen 14 may be a combination of a sensor, a monitor, and a pressure-sensitive surface, that is, a pressure-sensitive touchscreen. The sensor, the monitor, and the pressure-sensitive surface may be separated, or may be combined pairwise to form, for example, the touchscreen and a pressure panel, or a pressure screen and a touch panel, or a monitor and a pressure touch panel. This is not limited in this embodiment of the present invention.

Optionally, the processor 11 is further configured to: process the target sound signal, generate an output signal, and play or record the output signal.

The data transmission device 10 according to this embodiment of the present invention may be corresponding to the electronic device in the data transmission method in the embodiments of the present invention. In addition, units in the device 10 and other operations and/or functions described above are used to implement corresponding procedures of the method in FIG. 2. For brevity, details are not described herein.

Therefore, the sound signal collection device in this embodiment of the present invention picks up sound signals by using the at least two microphones, and obtains the target sound signal from the target sound source according to the direction, indicated by the first indication information, of the target sound source relative to the electronic device. Compared with using a paraboloidal sound collection hood in the prior art, the solution in the present invention reduces a size significantly by using existing microphones of the electronic device, so that the electronic device is easily integrated into an existing portable electronic device.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for ease of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections between some interfaces, apparatuses, or units, and may be implemented in electrical, mechanical, or other forms.

The units described as separate parts may or may not be physically separate. Parts displayed as units may or may not be physical units, and may be located in one position or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a portable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A sound signal collection method, wherein the method is applied to an electronic device having at least two microphones, and the method comprises:
obtaining, by the electronic device, first indication information, wherein the first indication information is used to indicate a direction of a target sound source of at least two sound sources relative to the electronic device;
receiving, by the electronic device, at least two mixed signals by using the at least two microphones, wherein a first mixed signal of the at least two mixed signals is received by using a first microphone of the at least two microphones, the first mixed signal of the at least two mixed signals comprises at least two sound signals, the at least two sound signals are in a one-to-one correspondence to the at least two sound sources, and each sound signal comes from a corresponding sound source; and
obtaining, by the electronic device, a target sound signal from the target sound source according to the first indication information and the at least two mixed signals, wherein
the first microphone of the at least two microphones is located at the top of the electronic device, and a second microphone of the at least two microphones is located at the bottom of the electronic device; or the at least two microphones are both located on a front side or a back side of the electronic device, and a distance between the first microphone of the at least two microphones and a second microphone of the at least two microphones is between 100 millimeters and 150 millimeters; or the first microphone of the at least two microphones is located on a front side of the electronic device, a second microphone of the at least two microphones is located on a back side of the electronic device, and a distance between the first microphone and the second microphone is greater than 18 millimeters.

2. The method according to claim 1, wherein the obtaining, by the electronic device, a target sound signal from the target sound source according to the first indication information and the at least two mixed signals comprises:
obtaining, by the electronic device, the target sound signal from the target sound source according to the first indication information, the at least two mixed signals, and sound pickup distances of the at least two microphones.

3. The method according to claim 1 or 2, wherein the electronic device has a touchscreen, and the touchscreen is configured to present a graphical user interface GUI; and
the obtaining, by the electronic device, first indication information comprises:
presenting, by the electronic device by using the GUI, a schematic direction screen on which the electronic device is used as a center;
detecting, by the electronic device, a first operation performed by a user on the touchscreen; and in response to the first operation, displaying the target sound source on the schematic direction screen presented in the GUI, wherein the first operation comprises a touch and a drag; and
determining, by the electronic device based on a direction that is of the target sound source relative to the electronic device and that is presented on the schematic direction screen, the first indication information.

4. The method according to claim 3, wherein the method further comprises:
detecting, by the electronic device, a second operation performed by the user on a region, on the touchscreen, corresponding to the target sound source; and in response to the second operation, displaying, on the schematic direction screen presented in the GUI, a distance between the target sound source and the electronic device, wherein the second operation comprises a touch and a drag; and
determining, by the electronic device, second indication information according to the distance between the target sound source and the electronic device, wherein the distance is displayed in the GUI, and the second indication information is used to indicate the distance between the target sound source and the electronic device; and
the obtaining, by the electronic device, a target sound signal from the target sound source according to the first indication information and the at least two mixed signals comprises:
obtaining, by the electronic device, the target sound signal from the target sound source according to the first indication information, the second indication information, and the at least two mixed signals.

5. The method according to any one of claims 1 to 4, wherein the method further comprises:
processing, by the electronic device, the target sound signal, generating an output signal, and playing or recording the output signal.

6. A sound signal collection apparatus, wherein the apparatus has at least two microphones, and the apparatus comprises:
an obtaining unit, configured to obtain first indication information, wherein the first indication information is used to indicate a direction of a target sound source of at least two sound sources relative to the apparatus; and
a receiving unit, configured to receive at least two mixed signals by using the at least two microphones, wherein a first mixed signal of the at least two mixed signals is received by using a first microphone of the at least two microphones, the first mixed signal of the at least two mixed signals comprises at least two sound signals, the at least two sound signals are in a one-to-one correspondence to the at least two sound sources, and each sound signal comes from a corresponding sound source, wherein
the obtaining unit is further configured to obtain a target sound signal from the target sound source according to the first indication information and the at least two mixed signals, wherein
the first microphone of the at least two microphones is located at the top of the apparatus, and a second microphone of the at least two microphones is located at the bottom of the apparatus; or the at least two microphones are both located on a front side or a back side of the apparatus, and a distance between the first microphone of the at least two microphones and a second microphone of the at least two microphones is between 100 millimeters and 150 millimeters; or the first microphone of the at least two microphones is located on a front side of the apparatus, a second microphone of the at least two microphones is located on a back side of the apparatus, and a distance between the first microphone and the second microphone is greater than 18 millimeters.

7. The apparatus according to claim 6, wherein the obtaining unit is specifically configured to obtain the target sound signal from the target sound source according to the first indication information, the at least two mixed signals, and sound pickup distances of the at least two microphones.

8. The apparatus according to claim 6 or 7, wherein the apparatus has a touchscreen, and the touchscreen is configured to present a graphical user interface GUI; and
the apparatus further comprises:
a display unit, configured to present, by using the GUI, a schematic direction screen on which the apparatus is used as a center;
a detection unit, configured to detect a first operation performed by a user on the touchscreen, wherein the first operation comprises a touch and a drag, wherein
the display unit is further configured to: in response to the first operation, display the target sound source on the schematic direction screen presented in the GUI; and
a determining unit, configured to determine, based on the direction that is of the target sound source relative to the apparatus and that is presented on the schematic direction screen, the first indication information.

9. The apparatus according to claim 8, wherein the detection unit is further configured to detect a second operation performed by the user on a region, on the touchscreen, corresponding to the target sound source, wherein the second operation comprises a touch and a drag;
the display unit is further configured to: in response to the second operation, display, on the schematic direction screen presented in the GUI, a distance between the target sound source and the apparatus;
the determining unit is further configured to determine second indication information according to the distance between the target sound source and the apparatus, wherein the distance is displayed in the GUI by the display unit, and the second indication information is used to indicate the distance between the target sound source and the apparatus; and
the obtaining unit is specifically configured to obtain the target sound signal from the target sound source according to the first indication information, the second indication information, and the at least two mixed signals.

10. The apparatus according to any one of claims 6 to 9, wherein the apparatus further comprises:
a processing unit, configured to process the target sound signal, generate an output signal, and play or record the output signal.

11. A sound signal collection device, wherein the device comprises a processor and at least two microphones;
the processor is configured to obtain first indication information, wherein the first indication information is used to indicate a direction of a target sound source of at least two sound sources relative to the device;
the at least two microphones are configured to receive at least two mixed signals, wherein a first mixed signal of the at least two mixed signals is received by using a first microphone of the at least two microphones, the first mixed signal of the at least two mixed signals comprises at least two sound signals, the at least two sound signals are in a one-to-one correspondence to the at least two sound sources, and each sound signal comes from a corresponding sound source; and
the processor is further configured to obtain a target sound signal from the target sound source according to the first indication information and the at least two mixed signals, wherein
the first microphone of the at least two microphones is located at the top of the device, and a second microphone of the at least two microphones is located at the bottom of the device; or the at least two microphones are both located on a front side or a back side of the device, and a distance between the first microphone of the at least two microphones and a second microphone of the at least two microphones is between 100 millimeters and 150 millimeters; or the first microphone of the at least two microphones is located on a front side of the device, a second microphone of the at least two microphones is located on a back side of the device, and a distance between the first microphone and the second microphone is greater than 18 millimeters.

12. The device according to claim 11, wherein the processor is specifically configured to obtain the target sound signal from the target sound source according to the first indication information, the at least two mixed signals, and sound pickup distances of the at least two microphones.

13. The device according to claim 11 or 12, wherein the device further comprises a touchscreen, configured to: present, by using a graphical user interface GUI, a schematic direction screen on which the device is used as a center, detect a first operation performed by a user on the touchscreen, wherein the first operation comprises a touch and a drag; and in response to the first operation, display the target sound source on the schematic direction screen presented in the GUI; and
the processor is specifically configured to determine, based on the direction that is of the target sound source relative to the device and that is presented on the schematic direction screen, the first indication information.

14. The device according to claim 13, wherein the touchscreen is further configured to:
detect a second operation performed by the user on a region, on the touchscreen, corresponding to the target sound source, wherein the second operation comprises a touch and a drag; and in response to the second operation, display, on the schematic direction screen presented in the GUI, a distance between the target sound source and the device; and
the processor is further configured to: determine second indication information according to the distance between the target sound source and the device, wherein the distance is displayed by the touchscreen by using the GUI, and the second indication information is used to indicate the distance between the target sound source and the device; and obtain the target sound signal from the target sound source according to the first indication information, the second indication information, and the at least two mixed signals.

15. The device according to any one of claims 11 to 14, wherein the processor is further configured to process the target sound signal, generate an output signal, and play or record the output signal.
